# EUROPÄISCHE PATENTSCHRIFT

(11) **EP 3 867 174 B1**
(45) Veröffentlichungstag und Bekanntmachung des Hinweises auf die Patenterteilung: **04.11.2026**
(21) Anmeldenummer: 19755346.4
(22) Anmeldetag: 14.08.2019
(51) Int. Cl.: B65G 29/00, B65G 47/08, B65G 47/26, B65G 47/84, B65G 47/86, B67C 3/24, B67C 7/00, B65G 1/137

(54) **TEILUNGSWECHSELSTERN ZUM TRANSPORTIEREN UND ÜBERGEBEN VON BEHÄLTERN**
DIVIDING STAR WHEEL FOR TRANSPORTING AND TRANSFERRING CONTAINERS
ÉTOILE DE CHANGEMENT DE SÉPARATION PERMETTANT DE TRANSPORTER ET DE LIVRER DES RÉCIPIENTS

(30) Priorität: 17.10.2018 DE 102018217776
(43) Veröffentlichungstag der Anmeldung: 25.08.2021
(73) Patentinhaber: Krones AG, 93073 Neutraubling (DE)
(72) Erfinder: HOELLRIEGL, Thomas, 93073 Neutraubling (DE)
(74) Vertreter: Grünecker Patent- und Rechtsanwälte PartG mbB
(86) Internationale Anmeldenummer: PCT/EP2019/071798
(87) Internationale Veröffentlichungsnummer: WO 2020/078603

(56) Entgegenhaltungen:
- EP-A1- 0 801 014
- EP-A1- 2 139 665
- JP-A- 2000 072 245

## Beschreibung

Die Erfindung betrifft einen Teilungswechselstern zum Transportieren und Übergeben von Behältern, umfassend eine Mehrzahl von Greifelementen zum Greifen je eines Behälters und eine Kurvenführung, wobei der Teilungswechselstern derart ausgebildet ist, dass die Greifelemente im Betrieb geführt durch die Kurvenführung entlang einer Kurvenbahn um die Drehachse des Teilungswechselsterns umlaufen.

Bei Behälterbehandlungsanlagen ist bekannt, Behälter zur Übergabe an Rundläufermaschinen, in denen die Behälter bearbeitet werden, beispielsweise Füllmaschinen oder Etikettiermaschinen, mittels eines Teilungswechselsterns auf den Teilungsabstand zu bringen, der zur Übergabe an die Bearbeitungsstation erforderlich ist. Dazu werden der Teilungsabstand des Teilungswechselsterns im Übergabebereich der Behälter und der Teilungsabstand der Rundläufermaschine synchronisiert. Wenn eine Behälterbehandlungsanlage verschiedene Behälterformate bearbeiten soll, tritt in manchen Fällen die Situation auf, dass in einer im Produktionsfluss stromaufwärts angeordneten Maschinen der Anlage, beispielsweise eine Blasmaschine zum Formen der Behälter aus einem Preform, je nach Betriebsmodus (also je nach Behälterformat) unterschiedlich viele der Bearbeitungsstationen, beispielsweise Blasstationen der Blasmaschine, verwendet werden, beispielsweise jede Station in einem ersten Betriebsmodus und nur jede zweite oder jede dritte in einem zweiten Betriebsmodus. Wenn beispielsweise bei einer Maschine nur jede zweite Bearbeitungsstation verwendet wird, spricht man davon, dass sie mit halber Beladung fährt.

Aus der WO 2008/106921 A1 sind ein Verfahren und eine Vorrichtung zur Blasformung von Behältern bekannt. Es wird hierbei ein Vorformling nach einer thermischen Konditionierung durch Blasdruckeinwirkung innerhalb einer Blasform in den Behälter umgeformt. Die Vorformlinge werden mindestens entlang eines Teils ihres Transportwegs von einem Tragelement positioniert, das von einem rotierenden Übergaberad gehalten ist. Relativ zum Übergaberad ist das Tragelement beweglich gelagert. Das Tragelement wird von einer Kurvensteuerung positioniert. Die Kurvensteuerung weist ein positionierbares Kurvensegment auf, das die Tragelemente vorgebbar in einer Arbeitspositionierung oder in einer Ruhepositionierung anordnet. In der Arbeitspositionierung werden die Tragelemente in einen Übergabebereich hineingeführt und in einer Ruhepositionierung aus diesem Übergabebereich ferngehalten. Die WO 2008/106921 A1 offenbart den jeweiligen Oberbegriff der Ansprüche 1 und 10.

Typischerweise ist ein Teilungswechselstern vorgesehen, der so ausgebildet ist, dass er in einem Betriebsmodus, beispielsweise bei voller Beladung, die Behälter auf die Teilung bringt, die für die nachfolgende Maschine (bei voller Beladung dieser Maschine) benötigt wird. Wenn dann jedoch die stromaufwärts angeordnete Maschine mit halber Beladung gefahren werden soll und unverändert der Teilungswechselstern weiterverwendet wird, entstehen Lücken im Behälterfluss, die sich über den Teilungswechselstern hinweg in die stromabwärts angeordnete Maschine fortsetzen, so dass auch in dieser Maschine dann nicht alle Stationen besetzt sind.

Diese Lücken können nur dann geschlossen werden, wenn für jeden Betriebsmodus ein passender Teilungswechselstern verwendet wird. Beispielsweise muss der Teilungswechselstern für volle Beladung eine kleinere Teilungsänderung herbeiführen als bei halber Beladung. Daher muss auch der Teilungsabstand in Teilbereichen des Teilungswechselsterns für verschiedene Betriebsmodi verschieden sein. Um den Teilungsabstand eines Teilungswechselsterns zu ändern, beispielsweise für einen Formatwechsel, ist es bisher bekannt, die Kurvenführung, häufig in Form einer Kurvenscheibe, des Teilungswechselsterns auszutauschen und/oder die Anzahl der Greifelemente anzupassen. Das führt dazu, dass ein aufwändiger Umbau erforderlich ist, was auch eine relativ lange Standzeit der Anlage zur Folge hat. Außerdem wird für jeden Betriebsmodus eine eigene Kurvenscheibe benötigt, was zu hohen Anschaffungskosten führt. Auch eine separate Ansteuerung jedes Transportelements des Teilungswechselsterns ist möglich, was jedoch hohen Aufwand erfordert, vor allem um die benötigte Präzision zu erreichen.

Wenn der Betrieb mit genau zwei verschiedenen Teilungsabständen vorgesehen ist (beispielsweise zum Verarbeiten zweier verschiedener Behälterformate), ist alternativ auch möglich mit demselben Teilungswechselstern bzw. derselben Kurvenführung zu arbeiten. Beispielsweise kann bereits in der (stromaufwärts) angeordneten Rundläufermaschine entweder nur jede zweite Position belegt sein und entsprechend auch in nachfolgenden Rundläufermaschinen sowie den Teilungswechselsternen nur jede zweite Position belegt werden. Somit kann auf den Austausch des Teilungswechselsterns bzw. der Kurvenführung verzichtet werden. Das hat dann aber zur Folge, dass diese Rundläufermaschinen sehr groß ausgeführt sein müssen. Außerdem wird damit immer noch relativ wenig Flexibilität erreicht.

Es ist also Aufgabe der Erfindung - ohne eine Maschine größer als nötig auslegen zu müssen - eine höhere Flexibilität hinsichtlich des Teilungsabstands zu gewährleisten, insbesondere die Umstellung auf einen anderen Teilungsabstand zu vereinfachen und lange Standzeiten zu verringern.

Diese Aufgabe wird durch den Teilungswechselstern des Anspruchs 1 gelöst.

Der beanspruchte Teilungswechselstern ermöglicht also eine höhere Flexibilität, wobei kein aufwändiger Umbau oder lange Standzeiten erforderlich sind, weil eine Umstellung auf einen anderen Teilungsabstand schnell und unkompliziert erfolgen kann, indem das Kurvenführungssegment zugeschaltet oder weggeschaltet wird. Auch ist es nicht nötig, die Maschinen besonders groß auszulegen.

Der Teilungswechselstern umfasst typischerweise ein um die Drehachse drehbares Rotationselement, beispielsweise eine Rotationsscheibe, welches im Betrieb so angetrieben wird, dass es um die Rotationsachse rotiert. Die Greifelemente sind mit dem Rotationselement derart verbunden, dass sie im Betrieb durch das Rotationselement mitgenommen werden. Allerdings sind die Greifelemente nicht positionsfest und mit fester Ausrichtung mit dem Rotationselement verbunden. Die Greifelemente umfassen, neben den Greifwerkzeugen zum Greifen und Halten der

Behälter, Läufer. Der Teilungswechselstern ist derart ausgebildet, dass die Läufer von außen oder von innen (bezogen auf die Drehachse) gegen die Kurvenführung gedrückt werden und entlang der Kurvenführung durch diese geführt um die Rotationsachse umlaufen. Beispielsweise können die Läufer Rollen aufweisen, die an die Kurvenführung angepresst werden. Dadurch, dass keine positionsfeste Verbindung zwischen dem Rotationselement und den Greifelementen, insbesondere den Läufern, vorliegt, wird die Form der Kurvenbahn, die die Läufer durchlaufen, durch die Form der Kurvenführung definiert. Das Andrücken an die Kurvenführung kann beispielsweise mittels Zugfedern erreicht werden.

Als Kurvenführung wird demgemäß ein Bauelement bzw. eine Bauelementgruppe bezeichnet, der bzw. die derart um die Rotationsachse herum angeordnet und ausgebildet sind, dass beim Andrücken von Läufern, die um die Rotationsachse umlaufen, an die Kurvenführung die Läufer auf eine durch die Form der Kurvenführung vorgegebene Bahn gezwungen werden. Die Kurvenführung kann Stangen, Schienen und/oder Platten umfassen.

Mit Form der Kurvenführung, Form des Kurvenführungssegments und Form des Basiselements ist daher in dieser Anmeldung die Form gemeint, die die Kurvenbahn, welche die Greifelemente durchlaufen festlegt bzw. definiert. Dies ist jeweils der Bereich, an den die Läufer angedrückt werden.

Wenn die Läufer von außen (bezogen auf die Drehachse) an die Kurvenführung gedrückt werden, also die Außenform der Kurvenführung die Form der durchlaufenen Kurvenbahn definiert, wird dies als Außenführung bezeichnet. Wenn die Läufer von innen an die Kurvenführung gedrückt werden, also die Innenform der Kurvenführung die Form der durchlaufenen Kurvenbahn definiert, wird dies als Innenführung bezeichnet.

Die Greifwerkzeuge selbst können aktiv oder passiv betätigbar sein, beispielsweise kann es sich dabei um Zangen handeln.

Das Kurvenführungssegment und die Kurvenführung können insbesondere horizontal angeordnet sein.

Wie oben erläutert ist die Form der Kurvenführung durch Zuschalten eines Kurvenführungssegments einstellbar. Insbesondere ist die Form der Kurvenführung derart einstellbar, dass durch Zuschalten des Kurvenführungssegments die Form einer Kurvenbahn, die die Greifelemente durchlaufen, sich im Bereich des Kurvenführungssegments ändert. Dies wird unten noch im Detail erläutert.

Das Kurvenführungssegment kann zum Zuschalten von einem Passivzustand in einen Aktivzustand gebracht werden, wobei sich der Passivzustand und der Aktivzustand in Position und/oder Ausrichtung des Kurvenführungssegments unterscheiden. Dabei ist im Aktivzustand der Teilungsabstand im Bereich des Kurvenführungssegments anders, als im Passivzustand. Auch mehrere verschiedene Aktivzustände sind möglich. Die Position und/oder Ausrichtung des Kurvenführungssegments im Passivzustand kann insbesondere derart sein, dass es keinen Einfluss auf die Form der Kurvenbahn hat, wenn es sich im Passivzustand befindet.

Als Teilungsabstand wird in der vorliegenden Anmeldung der Abstand der Wirkungsmittelpunkte benachbarter Greifelemente, insbesondere den Wirkungsmittelpunkten der jeweiligen Greifwerkzeuge, bezeichnet. Dieser Abstand hängt von der Form der Kurvenbahn, die die Greifelemente durchlaufen (und somit auch von der Form der Kurvenführung) ab. Der Teilungsabstand muss nicht an jeder Position der Greifelemente auf der Kurvenbahn gleich sein. Entlang der Kurvenbahn kann sich beispielsweise die relative Position und/oder Ausrichtung benachbarter Greifelemente verändern, was eine Änderung des Teilungsabstands zur Folge hat. Die Kurvenführung kann insbesondere derart ausgebildet sein, dass der Teilungsabstand je nach Position der jeweiligen Greifelemente auf der Kurvenbahn unterschiedlich ist. Das heißt, der Teilungsabstand kann sich beim Durchlaufen der Kurvenbahn gemäß der Form der Kurvenbahn ändern.

Bei den Behältern kann es sich um Flaschen, Gläser oder andere im Rundläufer transportierbare und bearbeitbare Behälter handeln.

Es versteht sich, dass in der vorliegenden Anmeldung beim Ändern des Teilungsabstands gemeint ist, dass die verschiedenen Teilungsabstände jeweils unter Verwendung aller Greifelemente, also bei der gleichen Anzahl an Greifelementen, einstellbar sind, wobei alle Greifelemente auch in einer Aktivposition angeordnet sind, in der sie im Betrieb Behälter greifen und transportieren.

Das Zuschalten kann ein Verschieben und/oder ein Verschwenken des Kurvenführungssegments umfassen, insbesondere ein Verschwenken und/oder Verschieben in horizontaler Richtung. Der Teilungswechselstern kann dann beispielsweise mindestens ein einschwenkbares und ausschwenkbares Kurvenführungssegment und/oder mindestens ein einschiebbares Kurvenführungssegment umfassen.

Das heißt, dass der Teilungsabstand durch Verschieben und/oder Verschwenken des Kurvenführungssegments variiert werden kann. Diese Art den Teilungsabstand einzustellen ist relativ einfach, erfordert keinen Umbau und kann so gestaltet werden, dass das Einstellen des Teilungsabstands von außerhalb des Transportbereichs des Teilungswechselsterns, in dem im Betrieb die Behälter transportiert werden, und/oder automatisch erfolgen kann.

Das Kurvenführungssegment kann insbesondere oberhalb oder unterhalb des Basiselements oder zwischen einem oberen und einem unteren Teil des Basiselements angeordnet sein. Der Teilungswechselstern kann dabei insbesondere derart ausgebildet sein, dass durch das Verschieben und/oder Verschwenken das Kurvenführungssegment zumindest teilweise seitlich über das Basiselement übersteht. Seitlich überstehen bedeutet hier insbesondere, dass das Kurvenführungssegment bei einer Außenführung bezüglich der Drehachse des Teilungswechselsterns nach außen hin und bei einer Innenführung nach innen hin über das Basiselement übersteht.

Der Teilungswechselstern kann insbesondere mindestens ein Lager umfassen, das derart ausgebildet und angeordnet ist, dass das Kurvenführungssegment mittels des Lager schwenkbar gelagert ist. Alternativ oder zusätzlich kann der Teilungswechselstern mindestens eine Führung, beispielsweise umfassend mindestens eine Stange oder Schiene, umfassen, mittels und/oder entlang derer das Kurvenführungssegment verschiebbar ist. Alternativ oder zusätzlich kann das Kurvenführungssegment auf zumindest einem vertikal und verschiebbar angeordneten Stützelement derart gelagert sein, dass das Zuschalten des Kurvenführungssegments durch ein Verschieben zusammen mit dem Stützelement erfolgt. Insbesondere kann dabei das Kurvenführungssegment auf zwei Stützelementen derart drehbar gelagert sein, dass durch Verschieben der beiden Stützelemente die Position und/oder die Ausrichtung des Kurvenführungssegments einstellbar ist.

Das Kurvenführungssegment kann automatisch zuschaltbar, insbesondere automatisch verschiebbar und/oder verschwenkbar, sein. Die ermöglicht ein schnelles und präzises Zuschalten des Kurvenführungssegments.

Der Teilungswechselstern kann einen Antrieb umfassen, insbesondere einen hydraulischen Antrieb und/oder einen pneumatischen Antrieb und/oder einen Motorantrieb, zum, insbesondere automatischen, Zuschalten, insbesondere zum Verschieben und/oder Verschwenken, des Kurvenführungssegments.

Der Antrieb kann insbesondere außerhalb des Transportbereichs der Behälter angeordnet sein. Der Antrieb kann mittels einer Steuereinrichtung des Teilungswechselsterns und/oder einer externen Steuereinrichtung ansteuerbar sein, wobei die Steuereinrichtung derart ausgebildet ist, dass sie den Antrieb so steuert, dass das Kurvenführungssegment in verschiedene vorgegebene Positionen und/oder Ausrichtungen gebracht wird, insbesondere in den Aktivzustand bzw. den Passivzustand. So kann der Teilungsabstand im Bereich des Kurvenführungssegments automatisch eingestellt werden.

Alternativ oder zusätzlich kann das Kurvenführungssegment an einen externen Antrieb koppelbar sein, der beispielsweise zu anderen Anlagenteilen gehört.

Die Kurvenführung umfasst ein Basiselement, dessen Form bei nichtzugeschaltetem Kurvenführungssegment eine erste Kurvenbahn definiert, und das Kurvenführungssegment ist derart zuschaltbar, dass bei zugeschaltetem Kurvenführungssegment die Form des Kurvenführungssegments und die Form des Basiselements zusammen eine zweite Kurvenbahn definieren, die sich von der ersten Kurvenbahn, insbesondere hinsichtlich des zugehörigen Teilungsabstands, unterscheidet. Hierbei unterscheidet sich insbesondere der Teilungsabstand im Bereich des Kurvenführungssegments.

Alternativ dazu können die Form des Kurvenführungssegments und die Form des Basiselements sowohl bei zugeschalteten als auch bei nichtzugeschalteten Kurvenführungssegment zusammen die (erste) Kurvenbahn definieren.

Der Teilungswechselstern umfasst ein erstes Kurvenführungssegment, ein zweites Kurvenführungssegment und. das Basiselement. Dabei ist das erste Kurvenführungssegment derart zuschaltbar, dass bei zugeschaltetem ersten Kurvenführungssegment und bei nichtzugeschaltetem zweiten Kurvenführungssegment die Form des ersten Kurvenführungssegments und die Form des Basiselements zusammen eine bzw. die zweite Kurvenbahn definieren. Zudem ist das zweite Kurvenführungssegment derart zuschaltbar, dass bei zugeschaltetem zweiten Kurvenführungssegment und bei nichtzugeschaltetem ersten Kurvenführungssegment die Form des zweiten Kurvenführungssegments und die Form des Basiselements zusammen eine dritte Kurvenbahn definieren, die sich von der zweiten Kurvenbahn, insbesondere hinsichtlich des zugehörigen Teilungsabstands, unterscheidet. Hierbei unterscheidet sich insbesondere der Teilungsabstand im Bereich des ersten und zweiten Kurvenführungssegments.

Das erste Kurvenführungssegment und das zweite Kurvenführungssegment können, insbesondere bei obiger Ausgestaltung, derart ausgebildet und angeordnet sein, dass jeweils zu einem Zeitpunkt nur eines der Kurvenführungssegmente zuschaltbar ist. Das hat den Vorteil, dass nicht versehentlich durch Fehlbedienung eine unvorhergesehene Kurvenbahn entsteht, wenn beide Kurvenführungssegmente zugeschaltet sind.

Insbesondere können dabei das erste und das zweite Kurvenführungssegment mechanisch miteinander derart gekoppelt sein, dass das Zuschalten des einen Kurvenführungssegments das andere Kurvenführungssegment wegschaltet. Wegschalten kann dabei bedeuten, dass das weggeschaltete Kurvenführungssegment in den oben beschriebenen Passivzustand gebracht wird. Eine solche mechanische Koppelung ist einfach und zuverlässig, beispielsweise, weil keine entsprechende Ansteuerung von Antrieben erforderlich ist.

Die oben beschriebenen Ausführungen mit zwei Kurvenführungssegmenten können insbesondere mit verschwenkbaren Kurvenführungssegmenten umgesetzt werden.

Das Kurvenführungssegment bzw. alle Kurvenführungssegmente können, insbesondere manuell und/oder automatisch, ohne Eingriff in den Teilungswechselstern zuschaltbar sein, insbesondere mittels Übertragungselementen, die zum Übertragen einer Antriebskraft zum Zuschalten an das bzw. die Kurvenführungssegmente ausgebildet ist.

Somit kann eine Umstellung des Teilungsabstandes, beispielsweise bei einem Garniturwechsel, durchgeführt werden, ohne Zugang zum Teilungswechselstern erfolgen. Dies ermöglicht insbesondere auch einen Einsatz in einer Aseptikmaschine.

Die Übertragungselemente können mindestens eine Einstellstange umfassen, die insbesondere vertikal von der Kurvenführung nach unten verläuft, wobei die Einstellstange insbesondere zum Verschwenken und/oder Verschieben des bzw. der Kurvenführungssegmente ausgebildet ist.

Dazu kann die Einstellstange mittels entsprechend ausgebildeter und angeordneter Koppelungselemente mit dem bzw. den Kurvenführungssegmenten gekoppelt sein, so dass lediglich durch Bewegen der Einstellstange die Position und/oder Ausrichtung der Kurvenführungssegmente einstellbar ist.

Die Erfindung betrifft auch eine Behälterbehandlungsanlage umfassend den oben beschriebenen Teilungswechselstern. Die Behälterbehandlungsanlage umfasst weiterhin eine im Betrieb stromaufwärts des Teilungswechselsterns angeordnete erste Behälterbehandlungsmaschine, insbesondere eine Blasmaschine, und eine im Betrieb stromabwärts des Teilungswechselsterns angeordnete zweite Behälterbehandlungsmaschine, beispielsweise eine Etikettiermaschine und/oder einen Füller. Der Teilungswechselstern ist derart ausgebildet und angeordnet, dass, wenn die Teilung im Auslauf der ersten Behälterbehandlungsmaschine geändert wird, durch Zuschalten des Kurvenführungssegments die Teilung in der zweiten Behälterbehandlungsmaschine beibehaltbar ist. Bei den Behälterbehandlungsmaschinen kann es sich insbesondere um Rundläufer handeln.

Die Erfindung betrifft auch ein Verfahren zum Formatwechsel eines Teilungswechselsterns umfassend eine Mehrzahl von Greifelementen zum Greifen je eines Behälters und eine Kurvenführung, wobei der Teilungswechselstern derart ausgebildet ist, dass die Greifelemente im Betrieb geführt durch die Kurvenführung entlang einer Kurvenbahn um die Drehachse des Teilungswechselsterns umlaufen. Das Verfahren umfasst, dass ein Kurvenführungssegment zugeschaltet oder weggeschaltet wird, so dass die Form der Kurvenführung derart eingestellt wird, dass sich im Bereich des Kurvenführungssegments der Teilungsabstand zwischen zwei benachbarten Greifelementen ändert.

Das Zuschalten kann ein Verschieben und/oder ein Verschwenken des Kurvenführungssegments umfassen, insbesondere ein Verschwenken und/oder Verschieben in horizontaler Richtung. Das Kurvenführungssegment kann automatisch zugeschaltet, insbesondere automatisch verschoben und/oder verschwenkt werden. Das Zuschalten des Kurvenführungssegments bzw. aller Kurvenführungssegmente kann, insbesondere manuell und/oder automatisch, ohne Eingriff in den Teilungswechselstern erfolgen.

Ferner ist ein nicht erfindungsgemäßes Verfahren zum Betreiben der oben beschriebenen Behälterbehandlungsanlage gegeben. Das Verfahren umfasst ein Behandeln der Behälter in der ersten Behälterbehandlungsmaschine, insbesondere Blasformen der Behälter, und ein Übergeben der Behälter von der ersten Behälterbehandlungsmaschine an den Teilungswechselstern, insbesondere über einen Auslaufstern, der zwischen der ersten Behälterbehandlungsmaschine und dem ganze Zahl größer 1 ist, insbesondere 2) Behandlungsstation der ersten Behälterbehandlungsmaschine besetzt ist, wobei der Teilungsabstand in der zweiten Behälterbehandlungsmaschine für den ersten Betriebsmodus und den zweiten Betriebsmodus gleich ist.

Das Übergeben der Behälter von der ersten Behälterbehandlungsmaschine an den Teilungswechselstern kann direkt oder über einen Auslaufstern der ersten Behälterbehandlungsmaschine erfolgen. Das Übergeben der Behälter von dem Teilungswechselstern an die zweite Behälterbehandlungsmaschine kann direkt oder über einen Einlaufstern der zweiten Behälterbehandlungsmaschine erfolgen.

Das heißt, zwischen der ersten und der zweiten Behälterbehandlungsmaschine kann entweder nur der Teilungswechselstern angeordnet sein oder es können zusätzlich zum Teilungswechselstern ein Einlaufstern und/oder ein Auslaufstern angeordnet sein.

Das heißt, selbst wenn im ersten Betriebsmodus mehr Behälter gleichzeitig in der ersten Behälterbehandlungsmaschine behandelt werden und der Behälterstrom im Auslauf der ersten Behälterbehandlungsmaschine dichter ist als im zweiten Betriebsmodus, kann der Behälterstrom im Einlauf der zweiten Behälterbehandlungsmaschine in beiden Betriebsmodi lückenlos sein, also die gleiche Dichte haben.

Es versteht sich, dass die im Zusammenhang mit dem Teilungswechselstern genannten Merkmale und Vorteile ebenfalls auf die Behälterbehandlungsanlage und die Verfahren anwendbar sind bzw. zutreffen.

Weitere Merkmale und Vorteile werden nachfolgend anhand der beispielhaften Figuren erläutert. Dabei zeigen:
Figur 1 eine schematische, nicht maßstabsgetreue Schrägansicht von oben auf den Teilungswechselstern gemäß einem ersten Beispiel, das nicht Teil der Erfindung ist,
Figur 2 eine schematische, nicht maßstabsgetreue Schrägansicht von unten auf den Teilungswechselstern gemäß dem ersten Beispiel,
Figur 3 eine schematische, nicht maßstabsgetreue Darstellung zweier unterschiedlicher Kurvenbahnen,
Figur 4 eine schematische, nicht maßstabsgetreue Schrägansicht von oben auf den Teilungswechselstern gemäß einer Ausführungsform,
Figur 5 eine schematische, nicht maßstabsgetreue Schrägansicht von oben auf einen Teil des Teilungswechselsterns gemäß der Ausführungsform,
Figuren 6a und 6b schematische, nicht maßstabsgetreue Schrägansichten von oben auf einen Teil des Teilungswechselsterns gemäß der Ausführungsform und
Figuren 7a und 7b zwei schematische, nicht maßstabsgetreue Draufsichten auf eine Behälterbehandlungsanlage mit unterschiedlicher Beladung.

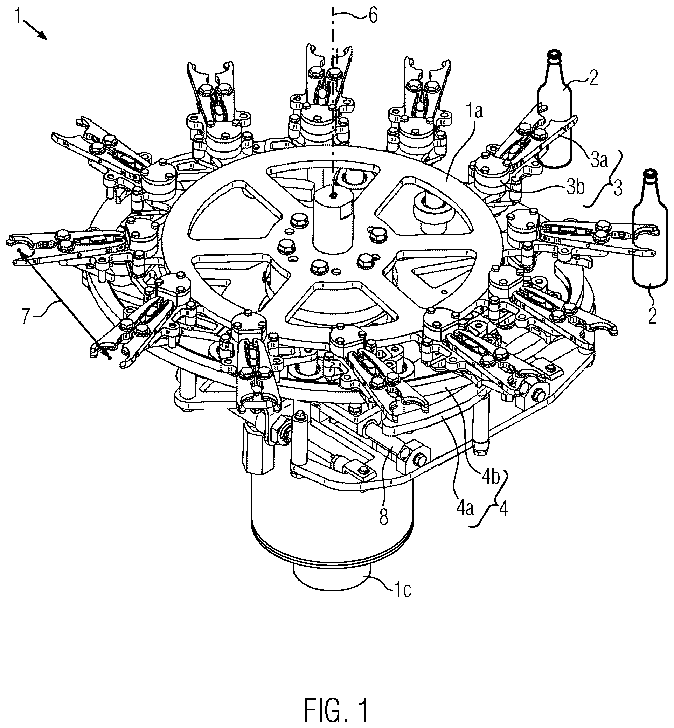

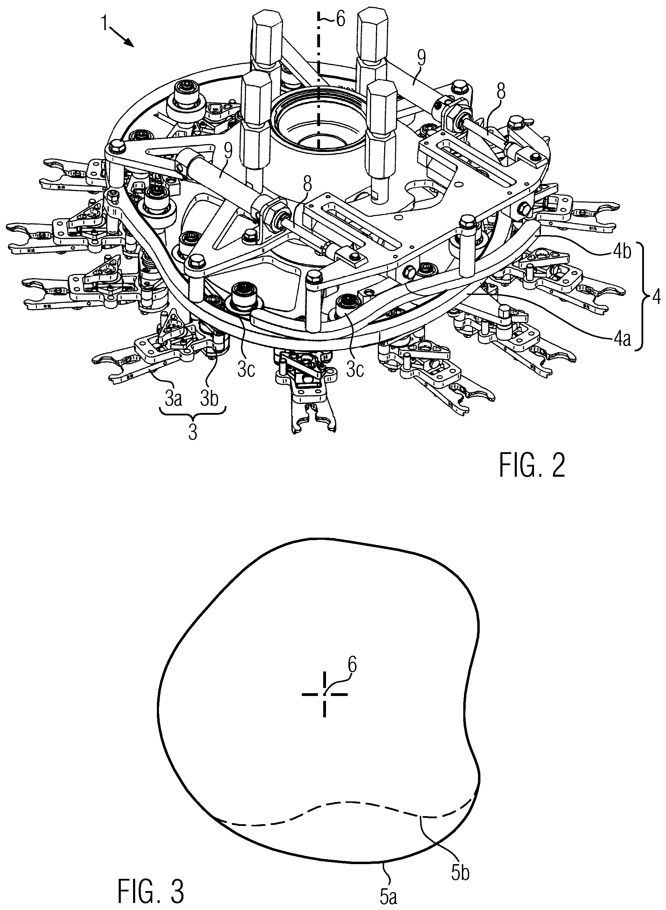

Figuren 1 und 2 zeigen Schrägansichten von unten bzw. von oben auf einen Teilungswechselstern 1 gemäß einem ersten Beispiel, das nicht Teil der Erfindung ist (wobei sich oben bzw. oben auf die für den Betrieb vorgesehene Anordnung des Teilungswechselsterns bezieht).

Der Teilungswechselstern ist zum Transportieren und Übergeben von Behältern 2, hier sind beispielhaft Flaschen angedeutet, ausgebildet und umfasst eine Mehrzahl von Greifelementen 3 zum Greifen je eines Behälters und eine Kurvenführung 4, die in diesem Beispiel eine Basiselement 4a und ein Kurvenführungssegment 4b umfasst.

Das Kurvenführungssegment ist hier beispielhaft unterhalb des Basiselements angeordnet. Dies hat den Vorteil, dass die Anbringung vergleichsweise einfach ist. Es ist jedoch ebenfalls denkbar, dass es oberhalb des Basiselements angeordnet ist.

Der Teilungswechselstern ist derart ausgebildet, dass die Greifelemente im Betrieb geführt durch die Kurvenführung entlang einer Kurvenbahn 5a oder 5b, die in Figur 3 schematisch gezeigt sind, um die Drehachse 6 des Teilungswechselsterns umlaufen.

Der Teilungswechselstern umfasst ein um die Drehachse drehbares Rotationselement, hier beispielsweise in Form einer Rotationsplatte 1a. Außerdem umfasst der Teilungswechselstern einen Antrieb 1c, der zum rotierenden Antreiben der Rotationsplatte ausgebildet ist. Die Greifelemente sind mit der Rotationsplatte derart verbunden, dass sie im Betrieb durch die Rotationsplatte mitgenommen werden, wenn diese rotiert. Die Greifelemente umfassen Greifwerkzeuge 3a, hier beispielsweise in Form von Zangen, zum Greifen und Halten der Behälter. Außerdem umfassen sie Läufer 3b, die in diesem Beispiel Rollen 3c umfassen. Dabei sind hier mehrere Rollen übereinander angeordnet, wobei die eine Rolle zum Wechselwirken mit an dem Basiselement und eine Rolle zum Wechselwirken mit dem Kurvenführungssegment angeordnet ist. Die Wechselwirkung kann ein Andrücken an die Kurvenführung umfassen.

In diesem Beispiel liegt beispielsweise eine Innenführung vor. Das heißt, die Läufer, insbesondere deren Rollen, werden von innen an die Kurvenführung gedrückt und die Innenform der Kurvenführung definiert die Form der Kurvenbahn, die die Greifelemente durchlaufen. Alternativ kann jedoch auch eine Außenführung erfolgen. Das Andrücken an die Kurvenführung wird in diesem Beispiel mittels Drehfedern erreicht. Andere Andrückmechanismen, beispielsweise Schraubenfedern, sind jedoch ebenfalls denkbar.

Durch Zuschalten des Kurvenführungssegments ist die Form der Kurvenführung derart einstellbar, dass sich im Bereich des Kurvenführungssegments der Teilungsabstand 7 zwischen zwei benachbarten Greifelementen ändert. Im Falle der hier gezeigten Innenführung steht das Kurvenführungssegment im zugeschalteten bzw. Aktivzustand nach innen hin (bezogen auf die Drehachse) über das Basiselement über. Dadurch laufen die Läufer in diesem Bereich auf einer weiter innen liegenden Kurvenbahn.

Das Kurvenführungssegment ist hier zum Zuschalten horizontal verschiebbar angeordnet. Im vorliegenden Beispiel umfasst der Teilungswechselstern Führungselemente 8, hier beispielsweise in Form von Stangen, mittels derer das Kurvenführungssegment verschiebbar ist. Es ist ebenfalls denkbar, dass die verschiebbare Anordnung anderweitig ausgebildet ist, beispielsweise indem das Kurvenführungssegment auf verschiebbaren, beispielsweise vertikal angeordneten, Halteelementen gelagert ist.

Optional kann der Teilungswechselstern einen Antrieb 9 umfassen, der über die Führungselemente 8 derart mit dem Kurvenführungssegment gekoppelt ist und diese so antreibt, dass das Kurvenführungssegment mittels des Antriebs zum Zuschalten bzw. Wegschalten verschiebbar ist. Beispielsweise kann der Antrieb einen Elektromotor, einen Hydraulikantrieb oder einen Pneumatikantrieb umfassen.

Figur 3 zeigt zwei verschiedene Kurvenbahnen, Kurvenbahn 5a, bei der das Kurvenführungssegment weggeschaltet ist, und Kurvenbahn 5b, bei der das Kurvenführungssegment zugeschaltet ist.

In einem weggeschalteten Zustand bzw. Passivzustand des Kurvenführungssegments laufen die Greifelemente entlang der ersten Kurvenbahn 5a. Im hier gezeigten Beispiel wird die Form der Kurvenbahn im Passivzustand allein durch die Form, hier die Innenform, des Basiselements der Kurvenführung definiert.

In einem zugeschalteten Zustand bzw. Aktivzustand steht das Kurvenführungssegment seitlich, in diesem Beispiel nach innen hin, über das Basiselement über. In dem Bereich, in dem das Kurvenführungssegment über das Basiselement übersteht, definiert die Form des Kurvenführungssegments die Form der Kurvenbahn. In den übrigen Bereichen definiert weiterhin die Form des Basiselements die Kurvenbahn. Somit wird die (zweite) Kurvenbahn 5b im Aktivzustand durch die Form (hier die Innenform) des Basiselements und durch die Form (hier die Innenform), des Kurvenführungssegments definiert.

Wie man der Figur 3 entnehmen kann, sind die Kurvenbahnen 5a und 5b verschieden. Somit ist auch der Teilungsabstand in dem Bereich, in dem sich die Kurvenbahnen unterscheiden, also im Bereich des Kurvenführungssegments, im Aktivzustand anders als im Passivzustand. Das heißt, durch Zuschalten des Kurvenführungssegments wird der Teilungsabstand im Bereich des Kurvenführungssegments geändert.

Hier sei angemerkt, dass die Form des Basiselements und des Kurvenführungssegments rein schematisch und beispielhaft dargestellt sind und keine Beschränkung auf diese spezielle Form besteht.

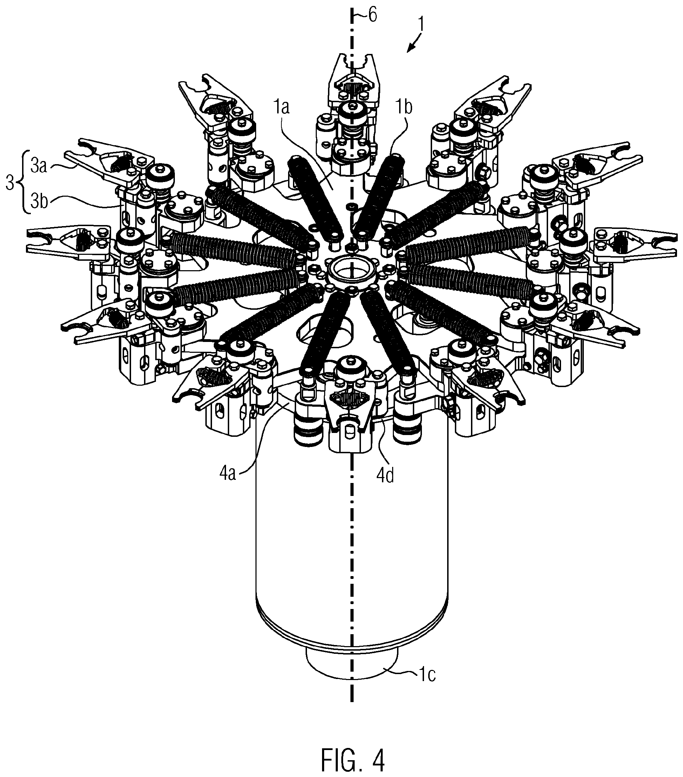

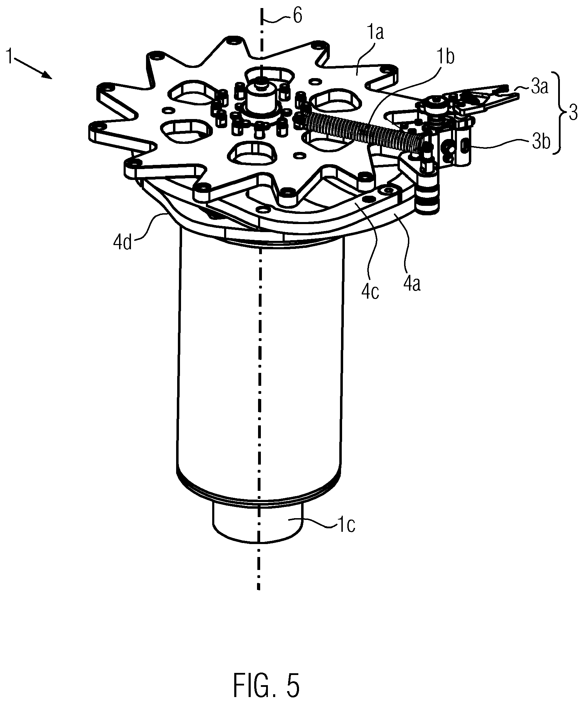

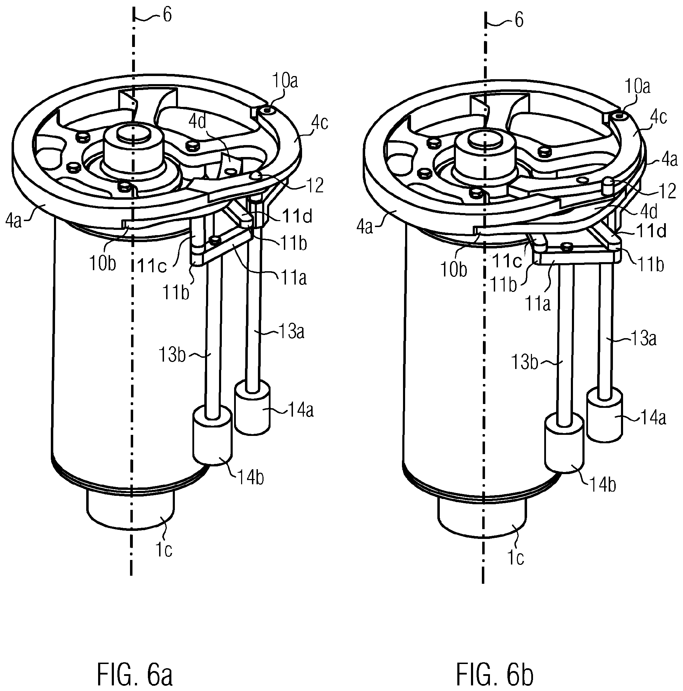

In Figuren 4 bis 6 ist eine Ausführungsform für einen Teilungswechselstern 1 gezeigt. Gleiche oder ähnliche Teile wie im ersten Beispiel sind hier mit gleichen Bezugszeichen gekennzeichnet. Figur 4 zeigt eine Schrägansicht von oben (wobei sich oben auf die für den Betrieb vorgesehene Anordnung des Teilungswechselsterns bezieht). Figuren 5 und 6 zeigen Ansichten der Ausführungsform, in der einige Elemente aus Figur 4 der Übersichtlichkeit halber nicht gezeigt sind, so dass die Kurvenführung besser sichtbar ist. Figuren 6a und 6b zeigen zudem optionale Stangen 13a und 13b und entsprechenden Antriebe 14a und 14b (siehe unten).

In der Ausführungsform liegt, im Gegensatz zum ersten Beispiel, eine Außenführung vor. Das heißt, die Läufer, insbesondere deren Rollen, werden von außen an die Kurvenführung gedrückt und die Außenform der Kurvenführung definiert die Form der Kurvenbahn. Eine Innenführung ist jedoch ebenfalls denkbar. Das Andrücken an die Kurvenführung wird hier mittels Zugfedern (Schraubenfedern) 1b erreicht. Andere Andrückmechanismen sind jedoch ebenfalls denkbar.

Gemäß der Ausführungsform umfasst der Teilungswechselstern, insbesondere die Kurvenführung 4, neben dem Basiselement 4a zwei horizontal verschwenkbare Kurvenführungssegmente 4c und 4d. Das erste verschwenkbare Kurvenführungssegment 4c ist oberhalb des Basiselements angeordnet und das zweite Kurvenführungssegment 4d ist unterhalb des Basiselements angeordnet. Es ist jedoch ebenfalls denkbar, dass beide Kurvenführungssegmente oberhalb oder unterhalb des Basiselements angeordnet sind. In ihrem jeweiligen Aktivzustand stehen die Kurvenführungssegmente nach außen hin (bezogen auf die Drehachse) über das Basiselement über. Im Passivzustand stehen die Kurvenführungssemente hier nicht seitlich über das Basiselement über.

Auch hier ergeben sich zwei Kurvenbahnen verschiedener Form, ähnlich wie dies im ersten Beispiel (siehe vor allem Figur 3) der Fall ist. Die erste Kurvenbahn ergibt sich, wenn das erste verschwenkbare Kurvenführungssegment 4c zugeschaltet und das zweite verschwenkbare Kurvenführungssegment 4d weggeschaltet ist. Die Form des Basiselements und die Form des ersten verschwenkbaren Kurvenführungssegmentes 4c definieren dann zusammen die Form der ersten Kurvenbahn. Die zweite Kurvenbahn ergibt sich, wenn das erste verschwenkbare Kurvenführungssegment 4c weggeschaltet und das zweite verschwenkbare Kurvenführungssegment 4d zugeschaltet ist. Die Form des Basiselements und die Form des zweiten verschwenkbaren Kurvenführungssegmentes 4d definieren dann zusammen die Form der zweiten Kurvenbahn. Die unterschiedliche Form der Kurvenbahn führt auch zu unterschiedlichen Teilungsabständen in diesem Bereich.

In dieser Ausführungsform weist das Basiselement ein Höhenprofil auf der Oberseite auf, das derart ausgebildet ist, dass die Oberseite des Basiselements und die Oberseite des ersten Kurvenführungssegments 4c bündig miteinander abschließen. Außerdem weist das Basiselement ein Höhenprofil auf der Unterseite auf, das derart ausgebildet ist, dass die Unterseite des Basiselements und die Unterseite des zweiten Kurvenführungssegments 4d bündig miteinander abschließen. Ein solches Höhenprofil ermöglicht eine sehr platzsparende Anordnung, ist jedoch optional.

Das Basiselement weist in dieser Ausführungsform beispielhaft zwei Lager 10a und 10b auf, wobei das erste Kurvenführungssegment 4c mittels des ersten Lagers 10a schwenkbar gelagert ist und das zweite Kurvenführungssegment 4d mittels des zweiten Lagers 10b schwenkbar gelagert ist. Eine andere Lagerung, insbesondere eine unabhängig vom Basiselement ausgebildete Lagerung, ist jedoch ebenfalls denkbar. Hier sind die beiden Kurvenführungssegmente jeweils an einem Ende gelagert und das andere Ende ist verschwenkbar. Die verschwenkbaren Enden der beiden Kurvenführungssegmente weisen aufeinander zu. Diese Anordnung ist in dieser speziellen Ausführungsform von Vorteil, weil eine unten beschriebene mechanische Koppelung zwischen den beiden Kurvenführungssegmenten vorliegt. Es ist jedoch ebenfalls denkbar, dass die verschwenkbaren Enden voneinander wegweisen oder dass das verschwenkbare Ende eines der Kurvenführungssegmente zu dem gelagerten Ende des anderen Kurvenführungssegments hin weist.

Wie in Figuren 6a und 6b gezeigt, können die beiden Kurvenführungssegmente in dieser Ausführungsform beispielhaft mechanisch miteinander gekoppelt sein, nämlich derart, dass das Zuschalten des einen Kurvenführungssegments das andere Kurvenführungssegment wegschaltet. Eine solche Koppelung ist optional, kann aber unter Umständen das Umschalten vereinfachen, weil keine gesonderte Steuerung erforderlich ist. In diesem Fall erfolgt die Koppelung über die Koppelungselemente. Insbesondere können solche Koppelungselemente Stangen 11a, die über Gelenke 11b verbunden sind, umfassen.

Wie in den Figuren 6a und 6b gezeigt, kann der Teilungswechselstern optional ein Arretierungselement 12 zum Arretieren der Kurvenführungssegmente umfassen, hier beispielsweise in Form eines Zentrierstiftes. Es können auch mehrere Arretierungselemente vorgesehen sein und das bzw. die Arretierungselemente können auch anderweitig, beispielsweise in Form von Stoppern, ausgebildet sein. Es kann auch ganz auf Arretierungselemente verzichtet werden, beispielsweise bei einer aktiven Steuerung der Position der Kurvenführungssegmente.

Im vorliegenden Beispiel weisen beide Kurvenführungssegmente je eine Aussparung in ihrem verschwenkbaren Ende auf, wobei die Form der Aussparung so zu der des Zentrierstiftes passt, dass der Zentrierstift, wenn er in die Aussparung eingeführt wird, das Kurvenführungssegment arretiert. Dabei kann entweder, wie hier gezeigt, genau ein Zentrierstift vorgesehen sein, oder es können mehrere Zentrierstifte vorgesehen sein, beispielsweise mindestens ein Zentrierstift für jedes Kurvenführungssegment.

In der vorliegenden Ausführungsform ist beispielhaft ein Arretierungsmechanismus dargestellt, bei dem der Zentrierstift jeweils in die Aussparung des im Aktivzustand befindlichen bzw. zugeschalteten Kurvenführungssegments eingreift und dieses fixiert. Alternativ oder zusätzlich ist auch möglich, mindestens einen Zentrierstift vorzusehen, der im Passivzustand in die Aussparung eingreift.

Außerdem ist der Teilungswechselstern in der vorliegenden Ausführungsform insbesondere so ausgebildet, dass der Zentrierstift, wenn er das zweite Kurvenführungssegment im zugeschalteten Zustand fixiert, zugleich eine Schwenkbewegung des ersten Kurvenführungssegments in Richtung Aktivzustand blockiert. Dies kann beispielsweise wie hier erreicht werden, indem die Aussparung in dem zweiten Kurvenführungssegment in Form einer Durchgangsöffnung für den Zentrierstift ausgebildet ist und der Zentrierstift so weit durch die Durchgangsöffnung hindurch nach oben ragt, dass er, wenn er das zweite Kurvenführungssegment im zugeschalteten Zustand fixiert, seitlich neben dem ersten Kurvenführungssegment angeordnet ist, so dass er eine Bewegung des ersten Kurvenführungssegments nach außen, also in Richtung Aktivzustand, blockiert. Eine solche Ausführung des Arretierungsmechanismus ist jedoch optional.

In den Figuren 6a und 6b ist der Zentrierstift mit einer, insbesondere senkrecht nach unten verlaufenden, Arretierstange 13a verbunden sein. Der Koppelungsmechanismus, insbesondere Stange 11a, ist mit einer, insbesondere senkrecht nach unten verlaufenden, Einstellstange 13b verbunden. Die Arretierstange ist dabei zum Einführen und Herausziehen des Zentrierstiftes durch Anheben oder Absenken der Arretierstange ausgebildet und angeordnet. Die Einstellstange 13b ist zum Zuschalten bzw. Wegschalten der Kurvenführungssegmente durch Verschieben der Stange 13b ausgebildet und angeordnet. Dabei ist die Einstellstange 13b fest über eine Mutter mit der mittleren Kopplungsstange 11a verbunden. Die mittlere Kopplungsstange 11a ist über ein Gelenk 11b mit der Kopplungsstange 11c verbunden, die wiederum mit dem ersten Kurvenführungssegment 4c verbunden ist. Zugleich ist die mittlere Kopplungsstange 11a über ein weiteres Gelenk 11b mit der Koppelstange 11d verbunden, welches mit dem zweiten Kurvensegment 4d verbunden ist. Daraus ergibt sich ein Kniehebel, welcher beim Schalten durch den Antrieb 14b jeweils ein Kurvensegment aktiv oder passiv stellt. So ist in der Figur 6a das erste Kurvenführungssegment 4c aktiv gestellt, während wegen des Kniehebels das zweite Kurvenführungssegment 4d passiv gestellt ist. In Figur 6b ist das Prinzip invers. Das erste Kurvenführungssegment 4c ist passiv gestellt, während das zweite Kurvenführungssegment 4d aktiv gestellt ist. Solche Einstellstangen sind jedoch optional. Sie sind insbesondere dann vorteilhaft, wenn das Umstellen des Teilungsabstandes ohne Eingriff in den Transportbereich erfolgen soll, insbesondere in Aseptikmaschinen. Die Arretierstange 13a kann optional mit einem Antrieb 14a zum Anheben und Absenken der Arretierstange 13a verbunden sein. Die Einstellstange 13b kann optional mit einem Antrieb 14b zum Verschieben der Einstellstange 13b verbunden sein. Die Antriebe können beispielsweise in Form von pneumatischen oder hydraulischen Antrieben oder in Form eines Motors ausgebildet sein, insbesondere eines Elektromotors.

Ein erfindungsgemäßes Verfahren zum Formatwechsel eines Teilungswechselsterns wird im Folgenden beispielhaft für die beiden oben beschriebenen Varianten eines Teilungswechselsterns beschrieben.

Im Fall des Teilungswechselsterns aus dem ersten Beispiel, erfolgt der Formatwechsel, indem das Kurvenführungssegment 4b mittels des Antriebs 9 verschoben wird, bis es seitlich über das Basiselement 4a übersteht. Da in dieser Ausführungsform die Innenform der Kurvenführung die Form Kurvenbahn definiert, steht das Kurvenführungssegment dabei bezogen auf die Drehachse nach innen seitlich über, wenn es im Aktivzustand ist. Das Kurvenführungssegment wird also Richtung Drehachse bzw. nach innen verschoben. Somit wird die Form der Kurvenbahn und somit auch der Teilungsabstand im Bereich des Kurvenführungssegments 4b geändert und an das neue Format angepasst. Um wieder auf das vorherige Format umzustellen, wird das Kurvenführungssegment in die entgegengesetzte Richtung verschoben, also von der Drehachse weg, so dass es nicht mehr seitlich über das Basiselement übersteht.

Wenn alternativ der Teilungswechselstern derart ausgebildet wäre, dass die Außenform der Kurvenführung die Kurvenbahn der Greifelemente definiert, würde ein Verschieben von der Drehachse weg, also nach außen, erfolgen, um das Kurvenführungssegment in einen Aktivzustand zu bringen.

Im Fall des Teilungswechselsterns nach der Ausführungsform kann ein Formatwechsel erfolgen, indem zwischen dem zugeschalteten Zustand des ersten Kurvenführungssegments 4c, wie in Figur 6a gezeigt, und des zweiten Kurvenführungssegments 4d, wie in Figur 6b gezeigt, gewechselt wird.

Beispielhaft wird hier der Fall beschrieben, in dem für das erste Behälterformat das zweite Kurvenführungssegment 4d zugeschaltet ist (Figur 6b). Um einen Wechsel für ein zweites Behälterformat durchzuführen, wird der Zentrierstift 12 mittels des Antriebs 14a und der Stange 13a nach unten aus der Aussparung in dem zweiten Kurvenführungssegment gezogen. Dieses ist nun nicht mehr fixiert.

Mittels des Antriebs 14b wird die zweite Stange 13b in horizontaler Richtung verschoben. Dadurch wird das zweite Kurvenführungssegment 4d durch entsprechende Koppelung mit der Stange 13b in den Passivzustand verschwenkt. Zugleich wird durch die Koppelung das erste Kurvenführungssegment 4c in den Aktivzustand geschwenkt, sprich zugeschaltet. Anschließend
wird die Stange 13a wieder nach oben geführt, so dass der Zentrierstift in die Aussparung im ersten Kurvenführungssegment eingreift.

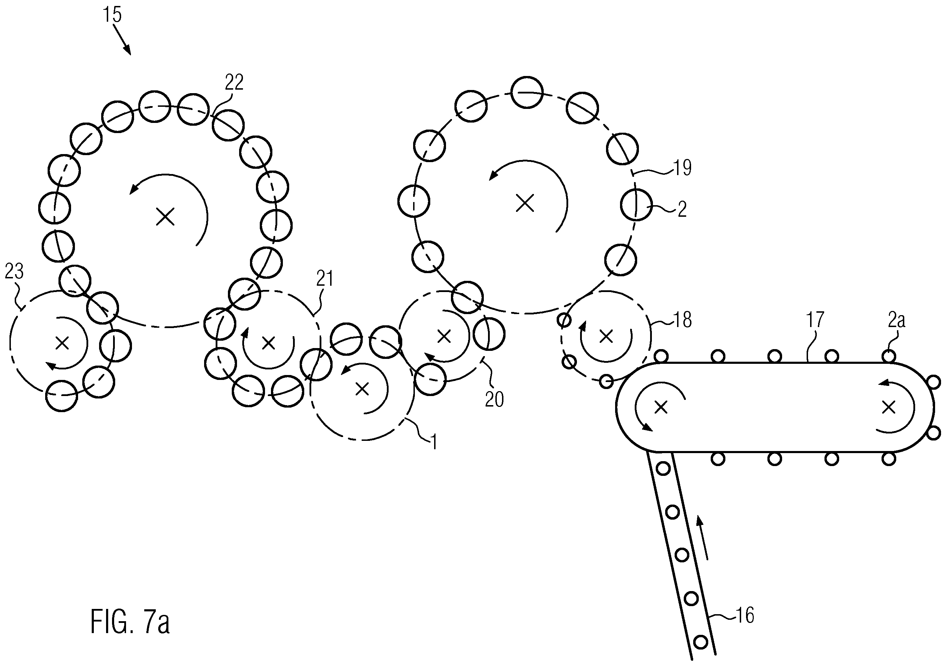

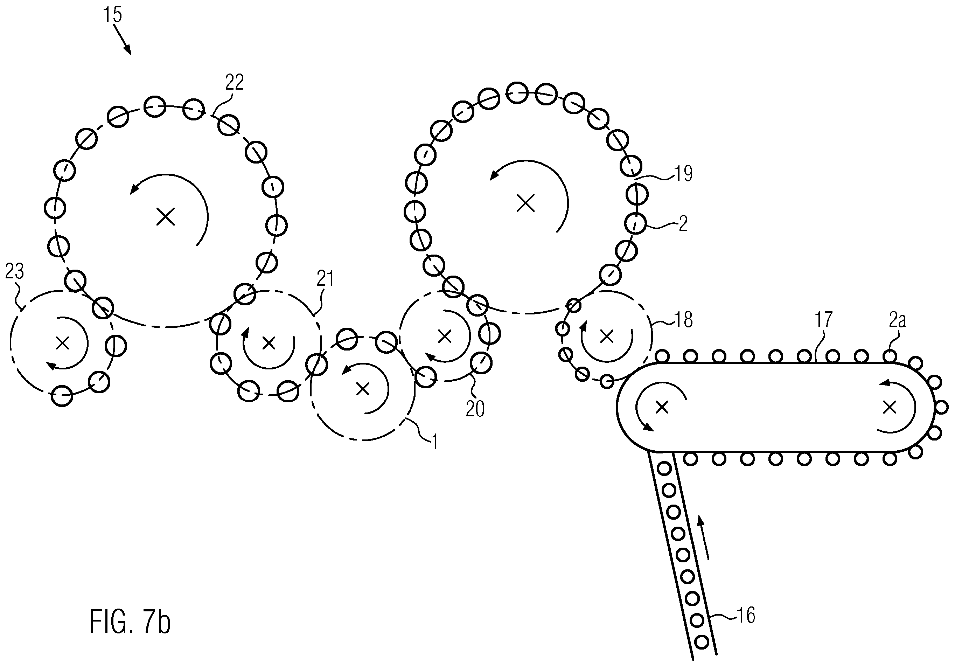

Figuren 7a und 7b zeigen zwei Draufsichten auf eine Behälterbehandlungsanlage 15, die einen erfindungsgemäßen Teilungswechselstern 1 umfasst, insbesondere einen der oben beschriebenen Teilungswechselsterne. Außerdem umfasst die Behälterbehandlungsanlage hier einen Anlagenteil zum Blasformen von Behältern 2 aus Preforms 2a, die wiederum eine Preformzuführung 16, eine Heizstrecke 17 zum Heizen der Preforms, einen Einlaufstern 18, eine erste Behälterbehandlungsmaschine 19, hier beispielhaft eine Blasmaschine, und einen Auslaufstern 20.

Der Einlaufstern 18 ist im Einlauf der Blasmaschine angeordnet und übernimmt im Betrieb Preforms aus der Heizstrecke und übergibt sie der Blasmaschine. Der Auslaufstern 20 ist im Auslauf der Blasmaschine angeordnet und übernimmt im Betrieb Behälter von der Blasmaschine und übergibt sie an den Teilungswechselstern.

Die Behälterbehandlungsanlage umfasst hier weiterhin einen Einlaufstern 21, eine zweite Behälterbehandlungsmaschine 22, hier eine Füllmaschine, und einen Auslaufstern 23, wobei der Einlaufstern 21 im Einlauf der Füllmaschine angeordnet ist und im Betrieb Behälter von dem Teilungswechselstern übernimmt und an die Füllmaschine übergibt und wobei der Auslaufstern Behälter von der Füllmaschine übernimmt. Alternativ oder Zusätzlich zu der Füllmaschine kann auch ein Etikettierer oder eine andere Maschine zum Behandeln von Behältern vorgesehen sein, insbesondere jeweils auch mit einem zugehörigen Einlaufstern und Auslaufstern, die dieser jeweils Behälter übergeben und von ihr Behälter übernehmen.

Es sei angemerkt, dass es sich bei den Behälterbehandlungsmaschinen 19 und 22 auch um andere Maschinen handeln kann und dass die Preformzuführung, die Heizstrecke und die verschiedenen Ein- und Auslaufsterne optional vorgesehen sind. Optional können auch noch weitere Elemente, insbesondere Transportelemente, zwischen den Behälterbehandlungsmaschinen vorgesehen sein.

In Figur 7a ist die Behälterbehandlungsanlage mit halber Beladung gezeigt und in Figur 7b ist die Behälterbehandlungsanlage mit voller Beladung gezeigt. Beispielsweise können diese Beladungen für verschieden große Behälter, beispielsweise jeweils für 1,5 l Behälter (halbe Beladung) bzw. 0,5 l Behälter (volle Beladung), verwendet werden.

Wie man erkennen kann sind bereits in der Preformzuführung und in der Heizstrecke bei halber Beladung größere Abstände zwischen den Preforms. In der Blasmaschine ist bei halber Beladung auch nur jede zweite Blasstation besetzt. In der nachfolgenden Füllmaschine sind hingegen bei halber und bei voller Beladung gleich viele Behälter gezeigt, sprich die Teilung in dieser Maschine ist jeweils die gleiche. Lücken im Behälterfluss, die bei halber Beladung im Auslauf aus der Blasmaschine auftreten, werden durch den Teilungswechselstern geschlossen.

Dazu kann, je nach dem mit welcher Beladung die Anlage gefahren wird, wie oben beschrieben, im Teilungswechselstern ein Kurvenführungssegment zugeschaltet oder weggeschaltet werden, um den Teilungsabstand geeignet anzupassen.

Alternativ zu der in Figuren 7a und 7b gezeigten Anordnung, ist ebenfalls möglich, dass zwischen zwei aufeinanderfolgenden Behälterbehandlungsmaschinen 19 und 22, insbesondere zwischen der Blasmaschine und der darauffolgenden Behälterbehandlungsmaschine, nur der Teilungswechselstern 1 selbst angeordnet ist. In diesem Fall übernimmt der Teilungswechselstern zugleich auch die Funktion eines Auslaufsterns für die stromaufwärts angeordnete Behälterbehandlungsmaschine 19 und die Funktion des Einlaufsterns für die stromabwärts angeordnete Behälterbehandlungsmaschine 22.

Ebenso ist möglich, dass zwischen zwei aufeinanderfolgenden Behälterbehandlungsmaschinen 19 und 22, insbesondere zwischen der Blasmaschine und der darauffolgenden Behälterbehandlungsmaschine, der Teilungswechselstern 1 und nur ein weiterer Stern angeordnet sind. Insbesondere kann zwischen den beiden Behälterbehandlungsmaschinen lediglich ein Einlaufstern 21 der stromabwärts angeordneten Behälterbehandlungsmaschine 22 oder ein Auslaufstern 20 der stromaufwärts angeordneten Behälterbehandlungsmaschine 19 zusätzlich zu dem Teilungswechselstern 1 angeordnet sein. In diesem Fall übernimmt der Teilungswechselstern 1 zugleich auch die Funktion eines Einlaufsterns für die stromabwärts angeordnete Behälterbehandlungsmaschine 22 bzw. des Auslaufsterns für die stromaufwärts angeordnete Behälterbehandlungsmaschine 19.

Optional können auch noch weitere Elemente, insbesondere Transportelemente, zwischen den Behälterbehandlungsmaschinen vorgesehen sein.

Ein beispielhaftes Verfahren zum Betreiben einer Behälterbehandlungsanlage, die einen erfindungsgemäßen Teilungswechselstern umfasst, insbesondere der oben beschriebenen Behälterbehandlungsanlage, werden Preforms mittels der Preformzuführung einer Heizstrecke zugeführt, durch die Heizstrecke transportiert und dort erwärmt, über den Einlaufstern 18 der Blasmaschine zugeführt und dort jeweils an einer Blasstation zu einem Behälter umgeformt. Danach werden die so erhaltenen Behälter mittels des Auslaufsterns 20 von der Blasmaschine übernommen und an den Teilungswechselstern 1 übergeben. Dieser wiederum übergibt die Behälter (mit geänderter Teilung) an den Einlaufstern einer nachfolgenden Maschine, beispielsweise einer Etikettiermaschine oder eines Füllers.

Das Betreiben umfasst dabei mindestens einen ersten Betriebsmodus, in dem jede Behandlungsstation der ersten Behälterbehandlungsmaschine besetzt ist (Figur 7b) und einen zweiten Betriebsmodus, in dem nicht jede, insbesondere nur jede zweite, Behandlungsstation der ersten Behälterbehandlungsmaschine besetzt ist (Figur 7a). Die Teilung in der zweiten Behandlungsanlage ist dabei für den ersten Betriebsmodus und den zweiten Betriebsmodus gleich.

Beim Umstellen der Betriebsmodi wird dabei insbesondere das Kurvenführungssegment weggeschaltet oder zugeschaltet.

Es versteht sich, dass in der zuvor beschriebenen Ausführungsform genannte Merkmale nicht auf diese speziellen Kombinationen beschränkt sind und auch in beliebigen anderen Kombinationen möglich sind.

## Patentansprüche

1. Teilungswechselstern (1) zum Transportieren und Übergeben von Behältern (2), umfassend eine Mehrzahl von Greifelementen (3) zum Greifen je eines Behälters (2) und eine Kurvenführung (4),
wobei der Teilungswechselstern (1) derart ausgebildet ist, dass die Greifelemente (3) im Betrieb geführt durch die Kurvenführung (4) entlang einer Kurvenbahn (5a, 5b) um die Drehachse des Teilungswechselsterns (1) umlaufen,
**dadurch gekennzeichnet, dass** der Teilungswechselstern (1) ein Basiselement (4a), ein erstes Kurvenführungssegment (4c) und ein zweites Kurvenführungssegment (4d) umfasst,
wobei das erste Kurvenführungssegment (4c) derart zuschaltbar ist, dass bei zugeschaltetem ersten Kurvenführungssegment (4c) und bei nichtzugeschaltetem zweiten Kurvenführungssegment (4d) die Form des ersten Kurvenführungssegments (4c) und die Form des Basiselements (4a) zusammen eine erste Kurvenbahn definieren, und
wobei das zweite Kurvenführungssegment (4d) derart zuschaltbar ist, dass bei zugeschaltetem zweiten Kurvenführungssegment (4d) und bei nichtzugeschaltetem ersten Kurvenführungssegment (4c) die Form des zweiten Kurvenführungssegments (4d) und die Form des Basiselements (4a) zusammen eine zweite Kurvenbahn definieren, die sich von der ersten Kurvenbahn unterscheidet, und
wobei durch Zuschalten mindestens eines der Kurvenführungssegmente (4c, 4d) die Form der Kurvenführung (4) derart einstellbar ist, dass sich im Bereich des Kurvenführungssegments (4c, 4d) der Teilungsabstand (7) zwischen zwei benachbarten Greifelementen (3) ändert.

2. Teilungswechselstern (1) nach Anspruch 1, wobei das erste Kurvenführungssegment (4c) oberhalb des Basiselements (4a) angeordnet ist, und wobei das zweite Kurvenführungssegment (4d) unterhalb des Basiselements (4a) angeordnet ist, oder wobei das erste Kurvenführungssegment (4c) und das zweite Kurvenführungssegment (4d) oberhalb oder unterhalb des Basiselements (4a) angeordnet sind, und
wobei das erste Kurvenführungssegment (4c) und das zweite Kurvenführungssegment (4d) derart ausgebildet sind, dass jeweils durch Verschieben und/oder Verschwenken das erste Kurvenführungssegment (4c) bzw. das zweite Kurvenführungssegment (4d) zugeschaltet wird.

3. Teilungswechselstern (1) nach Anspruch 1, wobei das erste Kurvenführungssegment (4c) und das zweite Kurvenführungssegment (4d) derart ausgebildet und angeordnet sind, dass jeweils zu einem Zeitpunkt nur eines der Kurvenführungssegmente (4c, 4d) zuschaltbar ist.

4. Teilungswechselstern (1) nach Anspruch 3, wobei das erste und das zweite Kurvenführungssegment (4c, 4d) mechanisch miteinander derart gekoppelt sind, dass das Zuschalten des einen Kurvenführungssegments (4c, 4d) das andere Kurvenführungssegment (4c, 4d) wegschaltet.

5. Teilungswechselstern (1) nach einem der vorangegangenen Ansprüche, wobei alle Kurvenführungssegmente (4c, 4d) ohne Eingriff in den Teilungswechselstern (1) mittels Übertragungselementen, die zum Übertragen einer Antriebskraft zum Zuschalten an die Kurvenführungssegmente (4c, 4d) ausgebildet sind, zuschaltbar sind.

6. Teilungswechselstern (1) nach Anspruch 5, wobei die Übertragungselemente eine Einstellstange (13b) umfassen.

7. Teilungswechselstern (1) nach Anspruch 6, wobei die Einstellstange (13b) vertikal von der Kurvenführung (4) nach unten verläuft und/oder wobei Einstellstange (13b) zum Verschwenken und/oder Verschieben der Kurvenführungssegmente (4c, 4d) ausgebildet ist.

8. Teilungswechselstern (1) nach einem der vorangegangenen Ansprüche,
wobei das Zuschalten ein Verschieben und/oder Verschwenken der Kurvenführungssegmente (4c, 4d) umfasst und/oder
wobei der Teilungswechselstern (1) einen Antrieb (9, 14b) zum Zuschalten der Kurvenführungssegmente (4c, 4d) umfasst.

9. Behälterbehandlungsanlage (15) umfassend den Teilungswechselstern (1) nach einem der vorangegangenen Ansprüche und eine im Betrieb stromaufwärts des Teilungswechselsterns (1) angeordnete erste Behälterbehandlungsmaschine (19) und eine im Betrieb stromabwärts des Teilungswechselsterns (1) angeordnete zweite Behälterbehandlungsmaschine (22), beispielsweise eine Etikettiermaschine und/oder ein Füller, wobei der Teilungswechselstern (1) derart ausgebildet und angeordnet ist, dass, wenn die Teilung im Auslauf der ersten Behälterbehandlungsmaschine geändert wird, durch Zuschalten der Kurvenführungssegmente (4c, 4d) die Teilung in der zweiten Behälterbehandlungsmaschine (22) beibehaltbar ist.

10. Verfahren zum Formatwechsel eines Teilungswechselsterns (1) umfassend eine Mehrzahl von Greifelementen (3) zum Greifen je eines Behälters (2) und eine Kurvenführung (4), wobei der Teilungswechselstern (1) derart ausgebildet ist, dass die Greifelemente (3) im Betrieb geführt durch die Kurvenführung (4) entlang einer Kurvenbahn (5a, 5b) um die Drehachse des Teilungswechselsterns (1) umlaufen,
**dadurch gekennzeichnet, dass** der Teilungswechselstern (4) ein Basiselement (4a), ein erstes Kurvenführungssegment (4c) und ein zweites Kurvenführungssegment (4d) umfasst,
wobei das erste Kurvenführungssegment (4c) derart zugeschaltet wird, dass bei zugeschaltetem ersten Kurvenführungssegment (4c) und bei nichtzugeschaltetem zweiten Kurvenführungssegment (4d) die Form des ersten Kurvenführungssegments (4c) und die Form des Basiselements (4a) zusammen eine erste Kurvenbahn definieren,
wobei das zweite Kurvenführungssegment (4d) derart zugeschaltet wird, dass bei zugeschaltetem zweiten Kurvenführungssegment (4d) und bei nichtzugeschaltetem ersten Kurvenführungssegment (4c) die Form des zweiten Kurvenführungssegments (4d) und die Form des Basiselements (4a) zusammen eine zweite Kurvenbahn definieren, die sich von der ersten Kurvenbahn unterscheidet, und
wobei die Form der Kurvenführung (4) derart eingestellt wird, dass sich im Bereich des Kurvenführungssegments (4c, 4d) der Teilungsabstand (7) zwischen zwei benachbarten Greifelementen (3) ändert.

11. Verfahren nach Anspruch 10, wobei das Zuschalten ein Verschieben und/oder ein Verschwenken der Kurvenführungssegmente (4c, 4d) umfasst.

12. Verfahren nach Anspruch 10 oder 11, wobei das Zuschalten aller Kurvenführungssegmente (4c, 4d) ohne Eingriff in den Teilungswechselstern (1) erfolgt.

## Claims

1. A pitch-change starwheel (1) for transporting and transferring containers (2), comprising a plurality of gripping elements (3) for gripping one container (2) each and a cam guide (4),
wherein the pitch-change starwheel (1) is configured such that, during operation, the gripping elements (3), guided by the cam guide (4), rotate along a cam track (5a, 5b) around the axis of rotation of the pitch-change starwheel (1),
**characterized in that** the pitch-change starwheel (1) comprises a base element (4a), a first cam guide segment (4c) and a second cam guide segment (4d),
wherein the first cam guide segment (4c) can be activated such that when the first cam guide segment (4c) is activated and the second cam guide segment (4d) is not activated the shape of the first cam guide segment (4c) and the shape of the base element (4a) together define a first cam track, and
wherein the second cam guide segment (4d) can be activated such that when the second cam guide segment (4d) is activated and the first cam guide segment (4c) is not activated the shape of the second cam guide segment (4d) and the shape of the base element (4a) together define a second cam track that is different from the first cam track, and
wherein by activating at least one of the cam guide segments (4c, 4d) the shape of the cam guide (4) is adjustable such that the pitch distance (7) between two adjacent gripping elements (3) changes in the region of the cam guide segment (4c, 4d).

2. The pitch-change starwheel (1) according to claim 1, wherein the first cam guide segment (4c) is arranged above the base element (4a), and wherein the second cam guide segment (4d) is arranged below the base element (4a), or wherein the first cam guide segment (4c) and the second cam guide segment (4d) are arranged above or below the base element (4a), and
wherein the first cam guide segment (4c) and the second cam guide segment (4d) are configured such that the first cam guide segment (4c) or the second cam guide segment (4d) is activated by shifting and/or pivoting, respectively.

3. The pitch-change starwheel (1) according to claim 1, wherein the first cam guide segment (4c) and the second cam guide segment (4d) are configured and arranged such that only one of the cam guide segments (4c, 4d) can be activated at a time.

4. The pitch-change starwheel (1) according to claim 1, wherein the first and the second cam guide segment (4c, 4d) are mechanically coupled such that by activating one cam guide segment (4c, 4d) the other cam guide segment (4c, 4d) is deactivated.

5. The pitch-change starwheel (1) according to anyone of the preceding claims, wherein all cam track segments (4c, 4d) can be activated without engaging the pitch-change starwheel (1) by means of transmission elements configured to transmit a driving force for activating the cam track segments (4c, 4d).

6. The pitch-change starwheel (1) according to claim 5, wherein the transmission elements comprise an adjustment rod (13b).

7. The pitch-change starwheel (1) according to claim 6, wherein the adjustment rod (13b) extends vertically downwards from the cam guide (4) and/or wherein the adjustment rod (13b) is configured for pivoting and/or shifting of the cam guide segments (4c, 4d).

8. The pitch-change starwheel (1) according to anyone of the preceding claims,
wherein the activation comprises shifting and/or pivoting the cam guide segments (4c, 4d) and/or
wherein the pitch-change starwheel (1) comprises a drive (9, 14b) for activating the cam guide segments (4c, 4d).

9. A container treatment plant (15) comprising the pitch-change starwheel (1) according to anyone of the preceding claims and a first container treatment machine (19) arranged upstream of the pitch-change starwheel (1) during operation and a second container treatment machine (22) arranged downstream of the pitch-change starwheel (1) during operation, for example a labelling machine and/or a filling device, wherein the pitch-change starwheel (1) is configured and arranged such that, in case the pitch is changed at the outfeed of the first container treatment machine the pitch in the second container treatment machine (22) can be maintained by activating the cam guide segments (4c, 4d).

10. A method for changing the format of a pitch-change starwheel (1) comprising a plurality of gripping elements (3) for gripping one container (2) each and a cam guide (4), wherein the pitch-change starwheel (1) is configured such that, during operation, the gripping elements (3) rotate around the axis of rotation of the pitch-change starwheel (1) along a cam track (5a, 5b) while being guided by the cam guide (4),
**characterized in that** the pitch-change starwheel (4) comprises a base element (4a), a first cam guide segment (4c) and a second cam guide segment (4d),
wherein the first cam guide segment (4c) is activated such that when the first cam guide segment (4c) is activated and the second cam guide segment (4d) is not activated the shape of the first cam guide segment (4c) and the shape of the base element (4a) together define a first cam track, and
wherein the second cam guide segment (4d) is be activated such that when the second cam guide segment (4d) is activated and the first cam guide segment (4c) is not activated the shape of the second cam guide segment (4d) and the shape of the base element (4a) together define a second cam track that is different from the first cam track, and
wherein the shape of the cam guide (4) is adjusted such that the pitch distance (7) between two adjacent gripping elements (3) changes in the region of the cam guide segment (4c, 4d).

11. The method according to claim 10, wherein the activation comprises shifting and/or pivoting of the cam guide segments (4c, 4d).

12. The method according to claims 10 or 11, wherein the activation of all cam guide segments (4c, 4d) is effected without engaging the pitch-change starwheel (1).

## Revendications

1. Étoile de changement de division (1) permettant le transport et le transfert de récipients (2), comprenant une pluralité d'éléments de préhension (3), permettant de saisir respectivement un récipient (2), et un guide de courbe (4),
dans laquelle l'étoile de changement de division (1) est conçue de telle manière que les éléments de préhension (3) circulent autour de l'axe de rotation de l'étoile de changement de division (1) le long d'un chemin courbe (5a, 5b) en étant guidés en cours de fonctionnement grâce au guide de courbe (4),
**caractérisée en ce que**
l'étoile de changement de division (1) comprend un élément de base (4a), un premier segment de guide de courbe (4c) et un second segment de guide de courbe (4d),
dans laquelle le premier segment de guide de courbe (4c) peut être activé de telle manière que lorsque le premier segment de guide de courbe (4c) est activé et le second segment de guide de courbe (4d) n'est pas activé, la forme du premier segment de guide de courbe (4c) et la forme de l'élément de base (4a) définissent collectivement un premier chemin courbe, et
dans laquelle le second segment de guide de courbe (4d) peut être activé de telle manière que lorsque le second segment de guide de courbe (4d) est activé et le premier segment de guide de courbe (4c) n'est pas activé, la forme du second segment de guide de courbe (4d) et la forme de l'élément de base (4a) définissent collectivement un second chemin courbe qui est différent du premier chemin courbe, et
dans laquelle la forme du guide de courbe (4) peut être ajustée grâce à l'activation d'au moins un des segments de guide de courbe (4c, 4d), de telle manière que l'intervalle de division (7) entre deux éléments de préhension (3) voisins se modifie dans la région du segment de guide de courbe (4c, 4d).

2. Étoile de changement de division (1) selon la revendication 1, dans laquelle le premier segment de guide de courbe (4c) est agencé au-dessus de l'élément de base (4a), et dans laquelle le second segment de guide de courbe (4d) est agencé au-dessous de l'élément de base (4a), ou dans laquelle le premier segment de guide de courbe (4c) et le second segment de guide de courbe (4d) sont agencés au-dessus ou au-dessous de l'élément de base (4a), et
dans laquelle le premier segment de guide de courbe (4c) et le second segment de guide de courbe (4d) sont conçus de telle manière que le premier segment de guide de courbe (4c) et le second segment de guide de courbe (4d) sont activés respectivement par déplacement et/ou pivotement.

3. Étoile de changement de division (1) selon la revendication 1, dans laquelle le premier segment de guide de courbe (4c) et le second segment de guide de courbe (4d) sont conçus et agencés de telle manière qu'un seul des segments de guide de courbe (4c, 4d) peut respectivement être activé à un moment donné.

4. Étoile de changement de division (1) selon la revendication 3, dans laquelle les premier et second segments de guide de courbe (4c, 4d) sont couplés mécaniquement l'un à l'autre de telle manière que l'activation d'un segment de guide de courbe (4c, 4d) désactive l'autre segment de guide de courbe (4c, 4d).

5. Étoile de changement de division (1) selon l'une quelconque des revendications précédentes, dans laquelle tous les segments de guide de courbe (4c, 4d) peuvent, sans intervention dans l'étoile de changement de division (1), être activés au moyen d'éléments de transmission conçus pour transmettre aux segments de guide de courbe (4c, 4d) une force d'entraînement permettant l'activation.

6. Étoile de changement de division (1) selon la revendication 5, dans laquelle les éléments de transmission comprennent une tige de réglage (13b).

7. Étoile de changement de division (1) selon la revendication 6, dans laquelle la tige de réglage (13b) s'étend verticalement vers le bas à partir du guide de courbe (4) et/ou dans laquelle la tige de réglage (13b) est conçue pour faire pivoter et/ou déplacer les segments de guide de courbe (4c, 4d).

8. Étoile de changement de division (1) selon l'une quelconque des revendications précédentes,
dans laquelle l'activation comprend un déplacement et/ou un pivotement des segments de guide de courbe (4c, 4d) et/ou
dans laquelle l'étoile de changement de division (1) comprend un entraînement (9, 14b) permettant d'activer les segments de guide de courbe (4c, 4d).

9. Installation de traitement de récipients (15) comprenant l'étoile de changement de division (1) selon l'une quelconque des revendications précédentes et une première machine de traitement de récipients (19) agencée, en cours de fonctionnement, en amont de l'étoile de changement de division (1) et une seconde machine de traitement de récipients (22) agencée, en cours de fonctionnement, en aval de l'étoile de changement de division (1), par exemple une étiqueteuse et/ou une remplisseuse, dans laquelle l'étoile de changement de division (1) est conçue et agencée de telle manière que, lorsque la division est modifiée à la sortie de la première machine de traitement de récipients, la division dans la seconde machine de traitement de récipients (22) peut être conservée grâce à l'activation des segments de guide de courbe (4c, 4d).

10. Procédé de changement de format d'une étoile de changement de division (1), comprenant une pluralité d'éléments de préhension (3), permettant de saisir respectivement un récipient (2), et un guide de courbe (4), dans lequel l'étoile de changement de division (1) est conçue de telle manière que les éléments de préhension (3) circulent autour de l'axe de rotation de l'étoile de changement de division (1) le long d'un chemin courbe (5a, 5b) en étant guidés en cours de fonctionnement grâce au guide de courbe (4),
**caractérisé en ce que**
l'étoile de changement de division (4) comprend un élément de base (4a), un premier segment de guide de courbe (4c) et un second segment de guide de courbe (4d), dans lequel le premier segment de guide de courbe (4c) est activé de telle manière que lorsque le premier segment de guide de courbe (4c) est activé et le second segment de guide de courbe (4d) n'est pas activé, la forme du premier segment de guide de courbe (4c) et la forme de l'élément de base (4a) définissent collectivement un premier chemin courbe,
dans lequel le second segment de guide de courbe (4d) est activé de telle manière que lorsque le second segment de guide de courbe (4d) est activé et le premier segment de guide de courbe (4c) n'est pas activé, la forme du second segment de guide de courbe (4d) et la forme de l'élément de base (4a) définissent collectivement un second chemin de courbe qui est différent du premier chemin de courbe, et
dans lequel la forme du guide de courbe (4) est ajustée de telle manière que l'intervalle de division (7) entre deux éléments de préhension (3) voisins se modifie dans la région du segment de guide de courbe (4c, 4d).

11. Procédé selon la revendication 10, dans lequel l'activation comprend un déplacement et/ou un pivotement des segments de guide de courbe (4c, 4d).

12. Procédé selon la revendication 10 ou 11, dans lequel l'activation de tous les segments de guide de courbe (4c, 4d) s'effectue sans intervention dans l'étoile de changement de division (1).
